# EUROPÄISCHE PATENTANMELDUNG

(11) **EP 0 534 042 A1**
(43) Veröffentlichungstag der Anmeldung: **31.03.1993**
(21) Anmeldenummer: 91890223.0
(22) Anmeldetag: 23.09.1991
(51) Int. Cl.: F16L 27/08

(54) **Winkel-Einpressnippelanordnung für Druckmediumschläuche**

(71) Anmelder: WEBER, Gisela, A-2474 Gattendorf (AT)
(72) Erfinder: WEBER, Gisela, A-2474 Gattendorf (AT)
(74) Vertreter: Holzer, Walter, Dipl.-Ing.

(57) **Zusammenfassung**

Winkel-Einpreßnippelanordnung für Druckmediumschläuche, wobei die Anordnung aus zwei relativ zueinander verdrehbaren Teilen (1, 2) besteht, von denen der eine (1) zumindest einen Einpreßnippel (3), einen an diesen in axialer Richtung anschließenden, im wesentlichen zylindrischen Verbindungsabschnitt (4) sowie einen axial anschließenden Einschraubgewindeabschnitt (5) oder einen weiteren Einpreßnippel aufweist und von einem axialen Strömungskanal (6) durchsetzt ist, wogegen der andere Teil (2) der Anordnung eine auf dem Verbindungsabschnitt (4) sitzende Drehhülse (7) sowie zumindest einen mit dieser verbundenen, sich unter einem Winkel von vorzugsweise 90° zum Verbindungsabschnitt erstreckendes Einpreßnippel (8) aufweist und ebenfalls von einem axialen Strömungskanal (9) durchsetzt ist, der in das Innere der Drehhülse (5) ausmündet, die mit dem axialen Strömungskanal (6) des Verbindungsabschnittes (4) in Strömungsverbindung steht, wobei die Drehhülse (7) in axialer Richtung durch den am Einpreßnippel (3) des ersten Teiles (1) sitzenden Schlauch und den Einschraubgewindeabschnitt (5) oder den weiteren Einpreßnippel festgelegt ist.

## Beschreibung

Die Erfindung betrifft eine Winkel-Einpreßnippelanordnung für Druckmediumschläuche, insbesondere Hydraulikschläuche.

Derzeit sind für T-förmige Verbindungen bzw. Anschlüsse von Hydraulikschläuchen Einpreßnippel in Verwendung, die ausschließlich mit Hilfe von Rohrverschraubungen festgelegt werden können, d.h. daß die eingepreßten Nippel zur Herstellung einer T-Verbindung mit einem gesonderten T-Verbindungsstück verschraubt werden müssen. Diese Vorgangsweise ist nicht nur arbeits-, sondern auch kostenaufwendig, weil für jeden Nippelanschluß eine zugeordnete Rohrverschraubung und spezielle T-Stücke vorgesehen werden müssen. Überdies ergeben sich Abdichtungsprobleme.

Die Erfindung zielt darauf ab, diesen Nachteil zu vermeiden und eine Einpreßnippelanordnung zu schaffen, mit welcher Winkelverbindungen ohne gesonderte Rohrverschraubungsstücke hergestellt werden können. Die erfindungsgemäße Einpreßnippelanordnung zeichnet sich dadurch aus, daß die Anordnung aus zwei relativ zueinander verdrehbaren Teilen besteht, von denen der eine zumindest einen Einpreßnippel, einen an diesen in axialer Richtung anschließenden, annähernd zylindrischen Verbindungsabschnitt sowie einen axial anschließenden Einschraubgewindeabschnitt oder einen weiteren Einpreßnippel aufweist und von einem axialen Strömungskanal durchsetzt ist, wogegen der andere Teil der Anordnung eine auf dem Verbindungsabschnitt sitzende Drehhülse sowie zumindest einen mit dieser verbundenen, sich unter einem Winkel von vorzugsweise 90° zum Verbindungsabschnitt erstreckenden Einpreßnippel aufweist und ebenfalls von einem axialen Strömungskanal durchsetzt ist, der in das Innere der Drehhülse ausmündet, die mit dem axialen Strömungskanal des Verbindungsabschnittes in Strömungsverbindung steht, wobei die Drehhülse in axialer Richtung durch den am Einpreßnippel des ersten Teiles sitzenden Schlauch und den Einschraubgewindeabschnitt oder den weiteren Einpreßnippel festgelegt ist.

Gemäß einer bevorzugten Ausführungsform der Erfindung ist die Strömungsverbindung zwischen der Drehhülse und dem Verbindungsabschnitt durch eine Ringnut und einen in diese ausmündenden Radialkanal des Verbindungsabschnittes gebildet, und es ist die Drehhülse zu beiden Seiten der Ringnut gegen den Verbindungsabschnitt mit in diesem sitzender O-Ringe abgedichtet. Nach einem weiteren Erfindungsmerkmal können die Strömungskanäle unterschiedliche Durchmesser aufweisen.

Es sei erwähnt, daß derartige Ringraum/Radialkanal-Verbindungen an sich bei Schlauch- oder Rohrkupplungen bekannt sind, z.B. aus der EP-OS 0 215 318, der EP-OS 0 004 249 oder der EP-OS 0 300 327, dort allerdings in anderem Zusammenhang.

Die Erfindung ermöglicht auf einfache Weise eine Schwenkverbindung von Druckmediumschläuchen, die durch einfaches Einpressen der Schlauchanschlußnippel festgelegt werden kann, ohne daß spezielle Einschraubteile oder sonstige Zwischenstücke erforderlich wären. Hiedurch wird nicht nur der Material-, sondern auch der Arbeitsaufwand erheblich verringert. Die Verbindung ist einwandfrei dicht.

Die Erfindung wird nachfolgend an Ausführungsbeispielen unter Bezugnahme auf die Zeichnungen näher erläutert, in denen zeigen:
Fig. 1 eine Winkel-Einpreßnippelanordnung gemäß der Erfindung zum Teil im Schnitt,
Fig. 2 eine weitere Ausführungsform der Einpreßnippelanordnung mit auf dieser montierten Schläuchen zum Teil im Schnitt;
Fig. 3 eine andere Ausführungsform der Einpreßnippelanordnung gemäß der Erfindung mit einem aufgepreßten Schlauch zum Teil im Schnitt und
Fig. 4 eine vierte Ausführungsform der Einpreßnippelanordnung zum Teil im Schnitt.

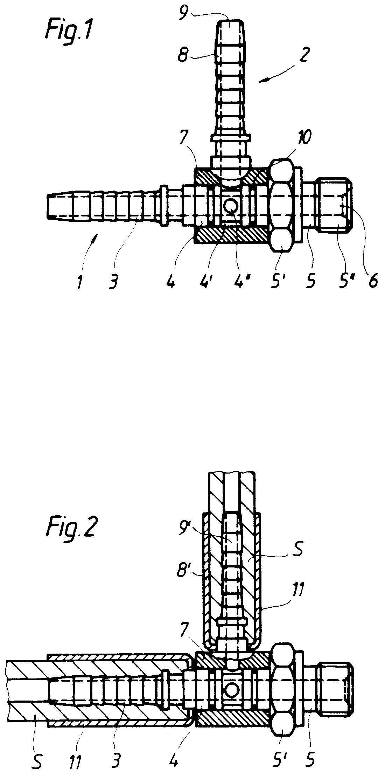

Die in Fig. 1 dargestellte Winkel-Einpreßnippelanordnung, die vorzugsweise aus verzinktem Stahl hergestellt ist, besteht im wesentlichen aus zwei Teilen 1, 2, die relativ zueinander verdrehbar sind. Der eine Teil 1 hat einen Einpreßnippel 3, dessen Außenumfang stufenförmig ausgebildet und in einen Schlauch S einpreßbar ist, wie dies Fig. 2 zeigt. An den Nippel 3 schließt ein im wesentlichen zylindrischer mittlerer Verbindungsabschnitt 4 an, der als Rohrverzweigung ausgebildet ist und der in einen Einschraubgewindeabschnitt 5 übergeht, welcher mit einem Werkzeugangriffssechskant 5' und einem Gewindeabschnitt 5'' ausgestattet ist. Die Teile 3, 4 und 5 sind einstückig ausgebildet und von einem axialen Strömungskanal 6 durchsetzt.

Auf den mittleren Verbindungsabschnitt 4 ist der zweite Teil 2 mit einer Drehhülse 7 mit üblicher Metallpassung aufgeschoben, die auf dem Abschnitt 4 frei drehbar ist. Die Drehhülse 7 ist mit einem zum Einpreßnippel 3 unter 90° verlaufenden Einpreßnippel 8 einstückig ausgebildet, welcher von einem axialen Strömungskanal 9 durchsetzt ist, der über die Hülse 7 in einer Umfangsnut 4' des Verbindungsabschnittes 4 zentral ausmündet. Über einen Radialkanal 4'' des Verbindungsrohrabschnittes 4 wird eine Strömungsverbindung zwischen den Kanälen 6 und 9 der beiden Nippel 3 und 8 hergestellt. Diese Strömungsverbindung wird im Abschnitt 4 durch zu beiden Seiten der Umfangsnut 4' in weiteren Umfangsnuten sitzenden O-Dichtungsringen 10 gegen die Drehhülse 7 abgedichtet.

Wie Fig. 2 zeigt, werden die beiden Einpreßnippel 3 und 8' in Schläuche S eingepreßt und die Schläuche S im Nippelbereich jeweils von einer aufgepreßten Metallhülse 11 umgeben. Durch Einpressen des Nippels 3 in den Schlauch S wird die Drehhülse 7 zwischen dem Schlauch S und dem Werkzeugangriffssechskant 5' in ihrer Stellung gehalten, bleibt aber verdrehbar. Die Drehhülse 7 sitzt auf dem Verbindungsabschnitt 4 mit einer üblichen Metallpassung. Die Ausführungsform nach Fig. 2 unterscheidet sich von jener nach Fig. 1 dadurch, daß der Nippel 8' kleineren Durchmesser hat und von einem Strömungskanal 9' durchsetzt ist, der kleineren Durchmesser als der Strömungskanal 6 des Nippels 3 hat.

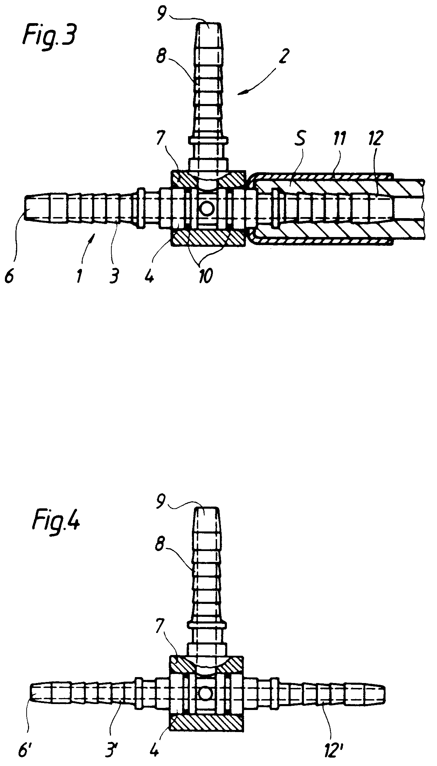

Bei der Ausführungsform nach Fig. 3 ist statt des Einschraubgewindeabschnittes 5 ein weiterer Einpreßnippel 12 vorgesehen. Im übrigen ist die Ausführung nach Fig. 3 im wesentlichen gleich der Ausbildung nach Fig. 1 getroffen. Die mit Metallpassung auf den Verbindungsabschnitt 4 aufgezogene Drehhülse 7 wird zu beiden Seiten mit den auf die Schläuche S aufgepreßten Metallhülsen 11 in ihrer Stellung gehalten, ist aber relativ zum Abschnitt 4 verdrehbar. Wie Fig. 4 zeigt kann der Strömungskanal der Nippel 3' und 12' kleineren Durchmesser haben als der Strömungskanal des Nippels 8, z.B. den halben Durchmesser, wodurch auch die Nippel kleinen Durchmesser haben.

Mit den dargestellten Ausführungsformen wird eine schwenkbare winkelförmige Schlauchverbindungsanordnung geschaffen, die es ermöglicht, auch Hochdruckmediumschläuche ohne zwischengeschaltete Rohrverschraubungen unmittelbar zu verbinden. Die Verbindung ist durch die beiden O-Ringe abgedichtet und axial festgelegt, läßt aber Schwenkbewegungen zu. Mit der Erfindung wird vorteilhaft jede Leckgefahr vermieden, die bei den bekannten Verbindungen mit zwischengeschalteten Rohrverschraubungsteilen z.B. infolge von Rüttelbewegungen im Betrieb aufgetreten sind.

Es versteht sich, daß die erläuterten Ausführungsbeispiele verschiedentlich abgewandelt werden können, insbesondere auch was den von der Anordnung gebildeten Winkel betrifft, der von 90° abweichen kann.

## Patentansprüche

1. Winkel-Einpreßnippelanordnung für Druckmediumschläuche, insbesondere Hydraulikschläuche, dadurch gekennzeichnet, daß die Anordnung aus zwei relativ zueinander verdrehbaren Teilen (1, 2) besteht, von denen der eine (1) zumindest einen Einpreßnippel (3, 3'), einen an diesen in axialer Richtung anschließenden annähernd zylindrischen Verbindungsabschnitt (4) sowie einen axial anschließenden Einschraubgewindeabschnitt (5) oder einen weiteren Einpreßnippel (12, 12') aufweist und von einem axialen Strömungskanal (6, 6') durchsetzt ist, wogegen der andere Teil (2) der Anordnung eine auf dem Verbindungsabschnitt (4) sitzende Drehhülse (7) sowie zumindest einen mit dieser verbundenen, sich unter einem Winkel von vorzugsweise 90° zum Verbindungsabschnitt (4) erstreckendes Einpreßnippel (8, 8') aufweist und ebenfalls von einem axialen Strömungskanal (9, 9') durchsetzt ist, der in das Innere der Drehhülse (7) ausmündet, die mit dem axialen Strömungskanal (6, 6') des Verbindungsabschnittes (4) in Strömungsverbindung steht, wobei die Drehhülse (7) in axialer Richtung durch den am Einpreßnippel (3, 3') des ersten Teiles (1) sitzenden Schlauch (S) und den Einschraubgewindeabschnitt (5) oder den weiteren Einpreßnippel (12, 12') festgelegt ist.

2. Anordnung nach Anspruch 1, dadurch gekennzeichnet, daß die Strömungsverbindung zwischen der Drehhülse (7) und dem Verbindungsabschnitt (4) durch eine Ringnut (4') und einen in diese ausmündenden Radialkanal (4'') des Verbindungsabschnittes gebildet ist, und daß die Drehhülse (7) zu beiden Seiten der Ringnut (4') gegen den Verbindungsabschnitt (4) mittels in diesem sitzender O-Ringe (10) abgedichtet ist.

3. Anordnung nach Anspruch 1 oder 2, dadurch gekennzeichnet, daß die Strömungskanäle (6, 6', 9, 9') der beiden Teile (1, 2) unterschiedliche Durchmesser aufweisen.
